# EUROPEAN PATENT APPLICATION

(11) **EP 2 996 433 A1**
(43) Date of publication of application: **16.03.2016**
(21) Application number: 13883875.0
(22) Date of filing: 10.05.2013
(51) Int. Cl.: H04W 84/18

(54) **METHOD, APPARATUS AND USER EQUIPMENT FOR NETWORK COVERAGE-FREE NEIGHBOR DISCOVERY**

(71) Applicant: ALCATEL LUCENT, 92100 Boulogne-Billancourt (FR)
(72) Inventor: LI, Dong, Shanghai 201206 (CN); LIU, Yong, Shanghai 201206 (CN); YANG, Kai, Shanghai 201206 (CN); XU, Yanli, Shanghai 201206 (CN)
(74) Representative: 2SPL Patentanwälte PartG mbB
(86) International application number: PCT/CN2013/075506
(87) International publication number: WO 2014/180000

(57) **Abstract**

The embodiment of the present invention provides a method, apparatus and user equipment for network coverage-free neighbor discovery from user mobile terminal equipment to user mobile terminal equipment. The method comprises: detecting a primary synchronization signal from other user equipment at a piece of user equipment, and using the user equipment as a head node if no primary synchronization signal is detected. The method further comprises: the user equipment transmitting the primary synchronization signals, secondary synchronization signals and configuration information periodically. Through the method, apparatus and user equipment for network coverage-free neighbor discovery from user mobile terminal equipment to user mobile terminal equipment in the present invention, neighbor discovery can be effectively realized in the case of no network coverage, thus direct equipment-to-equipment communication is performed, and meanwhile, not only is transmission conflict is avoided, but also mutual interference is inhibited.

## Description

### FIELD OF THE INVENTION

The present invention generally relates to the field of communications, and more specifically, relates to a method, apparatus and user equipment for neighbor discovery from user mobile terminal equipment to user mobile terminal equipment without network coverage.

### BACKGROUND OF THE INVENTION

A study item about user mobile terminal equipment to user mobile terminal equipment (D2D) was proposed in LTE R12. The purpose of the study item is studying the performance and standards of D2D in LTE cellular networks. In the study item, the network scenarios are classified into two types, namely, one with LTE network coverage and the other without cellular network coverage.

The first type, i.e., the one with network coverage, is for both public safety (PS) use and non-public safety use, such as commercial use. Differently, the non-network coverage scenario is only for the public safety use. In case of a natural disaster like earthquake etc., or extreme artificial destruction, the traditional cellular network coverage is probably destroyed.

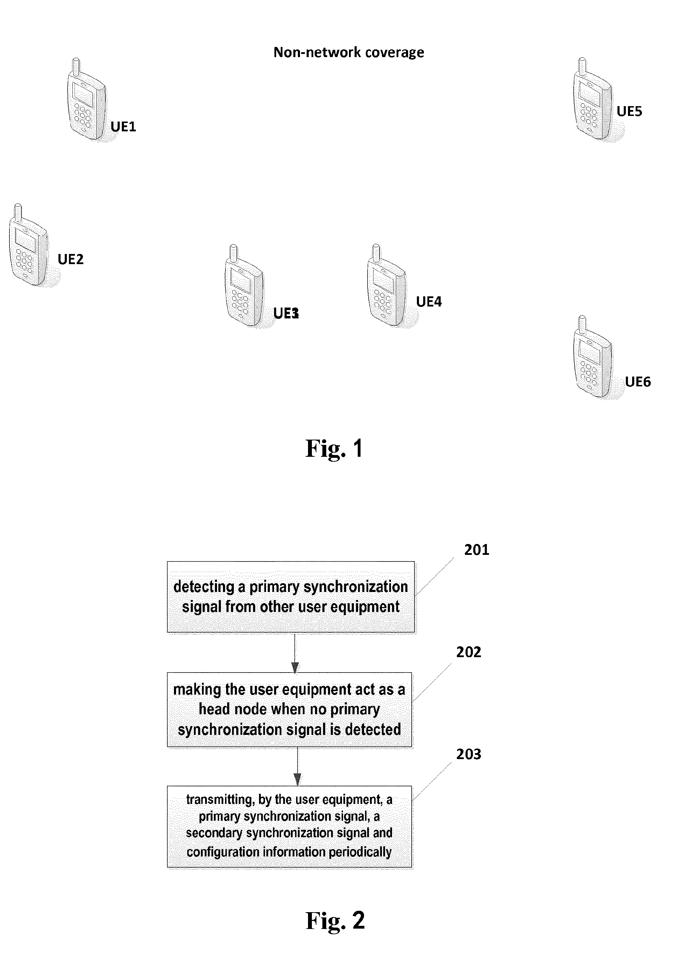

Fig. 1 shows a communication system in non-network coverage. As shown in Fig. 1, the communication system only comprises multiple user mobile terminal equipment, but there is not any cellular network coverage. At this time, if direct communications from user equipment to user equipment is desired to be established, a great challenge is to be faced.

Firstly, without network coverage, there is no common reference for timing/frequency synchronization. In cellular networks, the eNB provides common synchronization reference for all the user equipment (UEs) in each cell. In the non-network coverage scenario, there are no such synchronization references, since the central nodes, such as eNBs, do not exist or do not work properly due to disasters.

Secondly, UEs cannot receive the system configuration information broadcast by network. In LTE cellular networks, the main configuration parameters and system information are broadcast by eNBs, such that UEs may operate according to the specific configurations. In the non-network coverage scenarios, there are no base stations that can broadcast such information.

Finally, in the D2D network without network coverage, it is difficult for the fully distributed operation of the user terminal to increase the system efficiency and satisfy certain terms of performance requirements due to lack of central control nodes. For example, since there are no synchronization references in the non-network coverage scenario, the nodes may have to continuously search beacon signals of other nodes for discovery, such that their neighbor discovery will consume more power and cause a relative large delay. This should be avoided by some ways, particularly in some public safety applications.

### SUMMARY OF THE INVENTION

In order to mitigate or solve at least some of the above technical problems, the embodiments of the present invention provide an effective mechanism to efficiently realize neighbor discovery in a non-network coverage scenario, so as to perform direct communications from user mobile terminal equipment to user mobile terminal equipment, and meanwhile, to avoid transmission collisions and inhibit mutual interference.

According to one embodiment of the present invention, a method for neighbor discovery from user mobile terminal equipment to user mobile terminal equipment without network coverage is provided. The method comprises detecting, at a user equipment, a primary synchronization signal from other user equipment. The method further comprises making, when no primary synchronization signal is detected, the user equipment act as a head node, and periodically transmitting by the user equipment a primary synchronization signal, a secondary synchronization signal and configuration information.

According to another embodiment of the present invention, the method further comprises making, when a primary synchronization signal is detected, the user equipment act as a head node if the received signal to interference and noise ratio of the user equipment is less than or equal to a predetermined threshold, and dynamically adjusting synchronization signal parameters of the head node to avoid mutual interference with the user equipment transmitting the primary synchronization signal.

According to still another embodiment of the present invention, the method further comprises attaching, when a primary synchronization signal is detected, the user equipment to the user equipment transmitting the primary synchronization signal as a non-head node if the received signal to interference and noise ratio of the user equipment is greater than a predetermined threshold.

According to one embodiment of the present invention, the method further comprises selecting, by the user equipment, a neighbor discovery channel according to preconfigured information or configuration information received from the head node and transmitting a neighbor discovery signal on the selected neighbor discovery channel.

According to another embodiment of the present invention, the method further comprises adjusting the timing and a frequency of the user equipment to be consistent with the user equipment transmitting the primary synchronization signal.

According to still another embodiment of the present invention, an apparatus for neighbor discovery from user mobile terminal equipment to user mobile terminal equipment without network coverage provided. The apparatus comprises means for detecting, at a user equipment, a primary synchronization signal from other user equipment. The apparatus further comprises means for making the user equipment act as a head node when no primary synchronization signal is detected, and means for periodically transmitting a primary synchronization signal, a secondary synchronization signal and configuration information.

According to one embodiment of the present invention, the apparatus further comprises means for making, when a primary synchronization signal is detected, the user equipment act as a head node if the received signal to interference and noise ratio of the user equipment is less than or equal to a predetermined threshold, and dynamically adjusting synchronization signal parameters of the head node to avoid mutual interference with the user equipment transmitting the primary synchronization signal.

According to another embodiment of the present invention, the apparatus further comprises means for attaching, when a primary synchronization signal is detected, the user equipment to the user equipment transmitting the primary synchronization signal as a non-head node if the received signal to interference and noise ratio of the user equipment is greater than a predetermined threshold.

According to still another embodiment of the present invention, the apparatus further comprises means for selecting a neighbor discovery channel according to preconfigured information or configuration information received from the head node and transmitting a neighbor discovery signal on the selected neighbor discovery channel.

According to one embodiment of the present invention, the apparatus further comprises means for adjusting the timing and a frequency of the user equipment to be consistent with the user equipment transmitting the primary synchronization signal.

According to another embodiment of the present invention, user equipment comprising the above-mentioned apparatus is provided.

### BRIEF DESCRIPTION OF THE DRAWINGS

The above and other objectives, features and advantages of the present invention will become apparent in view of the following detailed description of the exemplary embodiments in conjunction with the accompanying drawings, in which:
Fig. 1 schematically shows a diagram of a communication system in the non-network coverage scenario;
Fig. 2 schematically shows a flow chart of a method for neighbor discovery from user mobile terminal equipment to user mobile terminal equipment without network coverage according to one embodiment of the present invention;
Fig. 3a and Fig. 3b respectively schematically shows a resource configuration and a channel structure without network coverage according to one embodiment of the present invention;
Fig. 4 schematically shows a flow chart of a method for neighbor discovery from user mobile terminal equipment to user mobile terminal equipment without network coverage according to another embodiment of the present invention; and
Fig. 5 schematically shows a block diagram of an apparatus for neighbor discovery from user mobile terminal equipment to user mobile terminal equipment without network coverage according to one embodiment of the present invention.

### DETAILED DESCRIPTION OF THE PREFERRED EMBODIMENTS

In the present invention, the D2D network nodes without LTE cellular network coverage make certain public safety (PS) user terminals act as the head nodes according to an autonomous head-node selection mechanism. After a PS node is determined to act as a head node, it will transmit synchronization signals and configuration parameters.

In the following, the flow of a method 200 for neighbor discovery according to an embodiment of the present invention will be described in detail in conjunction with Fig. 2.

Fig. 2 is a flow chart which shows a method 200 for D2D neighbor discovery without network coverage according to one embodiment of the present invention. As shown in Fig. 2, in step S201, at a user equipment, the user equipment detects a primary synchronization signal (D-PSS) from other user equipment. D-PSS refers to a primary synchronization signal for D2D neighbor discovery in the scenario, which is similar to the design of the PSS in the LTE system but different only in the used specific parameters. The detection of a primary synchronization signal is achieved by performing relevant operations with a sliding window.

Next, in step S202, when no primary synchronization signal is detected, the user equipment acts as a head node. Before establishment of D2D communications, each PS node has an equal chance to be the head node.

In step S203, the user equipment selected as the head node periodically transmits a primary synchronization signal, a secondary synchronization signal (D-SSS) and configuration information. Similar to D-PSS, D-SSS refers to a secondary synchronization signal for D2D neighbor discovery in the scenario, which is similar to the design of SSS in the LTE system but different only in the used specific parameters. However, please note that all the configuration information required in performing a D2D operation (i.e., neighbor discovery and direct communications) by the PS head node only includes configuration information transmitted by the PS head node and preconfigured parameters in the PS nodes. The user equipment acting as a non-head node may subsequently perform the timing synchronization and frequency synchronization with the head node to which it belongs according to the D-PSS, the D-SSS, and the configuration information. For example, a non-head PS node randomly selects a neighbor discovery (ND) channel from a configured non-head PS node ND channel pool, and transmits a beacon signal on the selected ND channel for being discovered by other nodes. At the same time, the non-head PS node will listen to the other non-head ND channels to discover its peer neighbors (i.e., non-head PS nodes).

Note that, in the present invention, although the selected head node acts as a role similar to a virtual base station, there are substantive differences between the head node in the non-network coverage scenario and the real base stations in cellular network coverage. The differences between them are mainly in that the head node in the present invention only takes very limited responsibilities, e.g., transmitting the synchronization signals and configuration parameters. Other functionalities of a normal eNB, such as power control, resource allocation, transmission format, and so on, may be implemented in a distributed manner in the D2D networks without network coverage.

In the following, the frame structure and resources for neighbor discovery of D2D in the non-network coverage scenario will be described in detail. In each ND period (which is preconfigured at each PS node, but this is not necessary and it may also be configured by the head node), the ND resources are divided into two parts: head node ND channel pool and non-head-node ND channel pool.

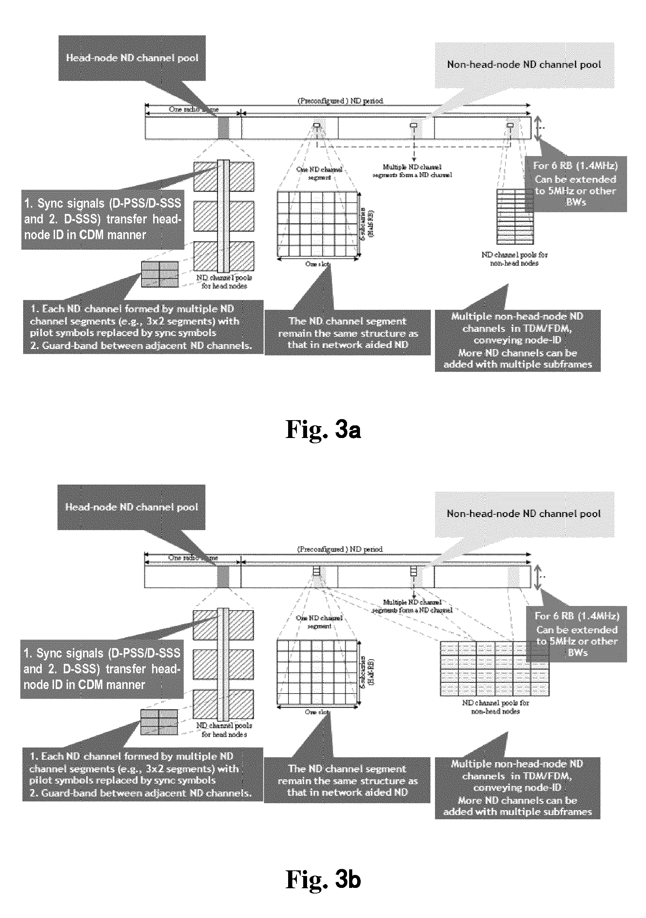

Fig. 3a and Fig. 3b respectively shows a resource configuration and a channel structure without network coverage according to one embodiment of the present invention. As shown in Fig. 3a and Fig. 3b, a head node ND channel pool consists of multiple ND channels and synchronization signals (the aforementioned D-PSS and D-SSS). The synchronization signals correspond uniquely to the ND channels and are multiplexed in a code division multiplexing (CDM) manner, whereas the ND channels are multiplexed in a frequency division multiplexing (FDM) manner. In order to make the system operations simpler and more efficient, in one embodiment of the present invention, the information carried by D-PSS may determine the selection of ND channel. In this way, head nodes that are not very far from one another (i.e., the adjacent head nodes) may avoid interfering with one another by using different D-PSS sequences, and non-head nodes may derive the ND channel used by the corresponding head node from the detected D-PSS sequence index.

For multiple head-node ND channels, each ND channel is formed from multiple ND channel segments (e.g., 3×2 channel segments as shown in Fig. 3a and Fig. 3b) and carries the configuration information from the head node. An ND channel segment is the basic structure unit of an ND channel. In a head-node ND channel, the two synchronization signals not only provide synchronization references, but also provide channel estimation required for the coherent detection for the ND channel signals. In addition, a guard band is designed between adjacent head-node ND channels, and this is necessary to mitigate the mutual interference between adjacent ND channels. This is different from the case with network coverage, since the head nodes inevitably have some frequency offsets and/or timing offsets in the case without network coverage.

In the non-head-node ND channel pool, there are a lot of non-head ND channels, each of which is constituted by multiple ND channel segments. In one embodiment, the multiple ND channel segments that form an ND channel may be configured in a distributed manner in time domain (option 1), as shown in Fig. 3a. In another embodiment, the multiple ND channel segments that form an ND channel may be adjacently arranged in frequency domain (option 2), as shown in Fig. 3b. The benefits of option 1 are in that, for a distributed design of the ND channel, significant time diversity gains may be provided, which is especially important for the detection performance for a small packet (such as a beacon packet). However, the drawback of option 1 is that a large amount of ND channels are multiplexed in frequency domain (as shown in Fig. 3a, the ND channel pool has a size of 12×2), which leads to that the non-head nodes that select these ND channels cannot discover one another due to the half-duplex constraint (i.e., a node cannot transmit and receive simultaneously). The advantages and disadvantages of option 2 are contrary to those of option 1.

The multiple non-head-node ND channels are multiplexed in time division multiplexing/frequency division multiplexing (TDM/FDM) and carry a discovery beacon packet. The discovery beacon packet is obtained by performing a series of processing (including CRC check coding, channel encoding (e.g., tail-biting convolutional coding), rate matching, physical layer scrambling, constellation modulation (e.g., QPSK), optional DFT pre-coding, and finally the mapping to the physical resources of the selected ND channel) on the ID information of the present user terminal node. The selection of the ND channel by each non-head node may be random and independent of one another. Note that more non-head ND channels may be added with multiple sub-frames. The configuration about the non-head ND channels may be controlled and broadcast by the head node.

Preferably, when a user equipment detects the D-PSS, the user equipment may act as a head node if the received signal to interference and noise ratio of the user equipment is less than or equal to a predetermined threshold, and the synchronization signal parameters of the head node may be dynamically adjusted to avoid mutual interference with the user equipment transmitting the D-PSS. On the other hand, in one embodiment, when a user equipment detects the D-PSS, the user equipment is attached to the user equipment transmitting the D-PSS as a non-head node if the received signal to interference and noise ratio of the user equipment is greater than the predetermined threshold.

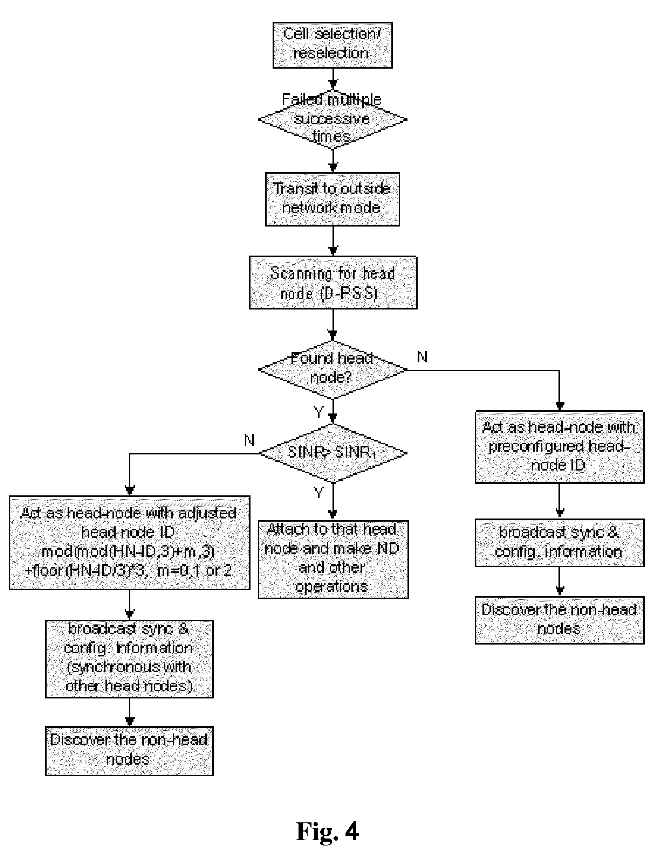

In the following, the flow encompassing a method 400 for neighbor discovery according to an embodiment of the present invention is described in detail in conjunction with Fig. 4.

Fig. 4 is the flow chart of the method 400 for neighbor discovery of D2D without network coverage according to another embodiment of the present invention. As shown in Fig. 4, the method 400 completely presents the process that how to determine which PS nodes may act as head nodes and which PS nodes may act as non-head nodes. In step S401, the traditional cellular cell search is firstly performed so as to select/reselect available cells. In step S402, when the number of successive failures of the cellular cell search exceeds a preconfigured number, step S403 is performed, at which the node converts into outside network coverage mode. In step S404, scanning for PS head nodes is started by searching for D-PSS sequences.

In step S405, it is judged whether a head node is already discovered (i.e., whether the detection mentioned in the method 200 receives the D-PSS). If no existing head nodes are discovered, then step S406 is performed, in which the PS node acts as a head node and uses the preconfigured head node ID, which uniquely corresponds to the D-PSS and D-SSS sequences. Next, in step S407, the PS node selected as the head node starts to transmit the corresponding primary synchronization signal, secondary synchronization signal and configuration information. In step S408, when other PS nodes come into the proximity of the head node, they may discover the head node by scanning the synchronization signals. In one embodiment, user equipment acting as a non-head node selects a neighbor discovery channel according to the preconfigured information or the configuration information received from the user equipment selected as the head node, and transmits a neighbor discovery signal on the selected neighbor discovery channel. For example, according to the configuration information from the head node, each of the other PS nodes will select an ND channel of a non-head node and transmit a neighbor discovery signal (e.g., a beacon packet) on the selected channel. The head node may discover adjacent non-head nodes through the beacon packet. At the same time, the non-head nodes could discover one another by receiving the beacon packets transmitted by other non-head nodes.

If a head node is discovered in step S405, then step S409 is performed, in which the PS node checks whether the received signal to interference and noise ratio (SINR) is greater than a threshold which is preconfigured. If the received SINR is greater than the threshold, which means that the PS node is relatively near to the head node, then the PS node attaches to the head node as a non-head node and then performs neighbor discovery and other relevant operations.

If the received SINR is less than the threshold, which means that the PS node is relatively far from the head node, then step S411 is performed, in which the PS node acts as a head node in its range. In this case, the synchronization signal parameters of the head node may be dynamically adjusted to avoid mutual interference with the user equipment transmitting the primary synchronization signal. For example, if the PS node finds that its preconfigured head-node primary synchronization sequence ID collides with the primary synchronization sequence ID of a existing head node, it may adjust the preconfigured head node ID. For instance, when only three D-PSS sequences are used, the primary synchronization sequence ID may be adjusted to be 0, 1 or 2, in order to avoid collision with an existing head-node primary synchronization sequence ID. In this case, the preconfigured ID number of the present PS node may be adjusted by calculating mod(HD-ID, 3) + m, 3) + floor (HD-ID/3)*3, wherein HD-ID represents the head node ID, and it is then avoided that the primary synchronization sequence ID of the newly selected head node is identical to the primary synchronization sequence ID of an existing head node. The purpose of so doing is to avoid collision with transmission of an existing head node, because the D-PSS sequence corresponds to the selection of the head-node ND channel which will be described later.

After the adjustment of the head node ID, in step S412, the PS node selected as the head node will broadcast a primary synchronization signal corresponding to the adjusted head-node primary synchronization sequence ID, a secondary synchronization signal, and configuration information. In one embodiment, the transmission timing and the transmission frequency of the user equipment acting as the head node may be consistent with that of the existing head node. Thus, the mutual interference among the head nodes is reduced as much as possible.

The foregoing describes the method 400 and its extension in a plurality of embodiments. Through the method 400 and its extension, the head node may discover non-head nodes in its proximity and may be discovered by the non-head nodes. At the same time, the non-head nodes may discover one another. Based on the discovery results, a PS node may decide whether to directly communicate with other one or more nodes. The method 400 may efficiently realize neighbor discovery in the non-network coverage scenario, thereby performing direct communications of device to device, as well as avoiding transmission collisions and inhibiting mutual interference.

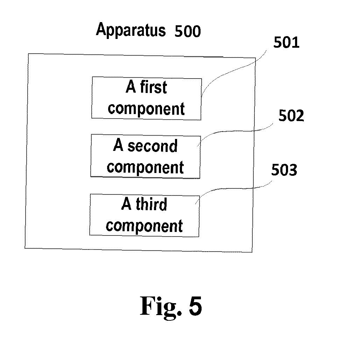

Fig. 5 is a block diagram which shows an apparatus for neighbor discovery from user mobile terminal equipment to user mobile terminal equipment without network coverage according to one embodiment of the present invention.

As shown in Fig. 5, the apparatus 500 comprises a first component 501, a second component 502 and a third component 503. The apparatus 500 can perform the above-mentioned method 200. The first component 501 is a component for detecting at a user equipment a primary synchronization signal from other user equipment. The second component 502 is a component for making the user equipment act as a head node when no primary synchronization signal is detected, and the third component 503 is a component for periodically transmitting a primary synchronization signal, a secondary synchronization signal and configuration information.

In another embodiment, the apparatus 500 further comprises a fourth component. The fourth component is a component for making, when a primary synchronization signal is detected, the user equipment act as a head node if the received signal to interference and noise ratio of the user equipment is less than or equal to a predetermined threshold, and dynamically adjusting the synchronization signal parameters of the head node to avoid mutual interference with the user equipment transmitting the primary synchronization signal.

In still another embodiment, the apparatus 500 further comprises a fifth component. The fifth component is a component for attaching, when a primary synchronization signal is detected, the user equipment to the user equipment transmitting the primary synchronization signal as a non-head node if the received signal to interference and noise ratio of the user equipment is greater than a predetermined threshold.

In one embodiment, the apparatus 500 further comprises a sixth component. The sixth component is a component for selecting a neighbor discovery channel according to preconfigured information or configuration information received from the head node, and transmitting a neighbor discovery signal on the selected neighbor discovery channel.

In one embodiment, the apparatus 500 further comprises a seventh component. The seventh component is a component for adjusting the timing and a frequency of the user equipment to be consistent with the user equipment transmitting the primary synchronization signal.

In view of the above, various embodiments of the present invention are described in detail in conjunction with the figures. Those skilled in the art may understand that the embodiments of the present invention may be implemented through hardware, software, firmware, modules or combinations thereof, or the present invention may be embodied in a computer program product arranged on a signal carrying medium for use by any proper data processing system. Such a signal carrying medium may be a transmission medium or a recordable medium for machine readable information, including a magnetic medium, an optical medium or other proper media. Examples of the readable medium include: a disk or a floppy disk in hard drive, CD for a CD drive, a magnetic tape, and other media that those skilled in the art could image. Those skilled in the art should realize that any communication terminal having an appropriate programing device can perform steps of the method in the present invention as embodied in the program product.

It should be noted that, in order to making the understanding of the present invention easier, the aforementioned description omits some more specific technical details which are well-known for those skilled in the art and may be necessary for the implementation of the present invention.

Although the particular embodiments of the present invention are already disclosed, those skilled in the art will understand that the particular embodiments may be changed without departing from the spirit and scope of the present invention. Therefore, the present invention is not limited to the particular embodiments, and the appended claims cover any and all applications, modifications and embodiments within the scope of the present invention.

## Claims

1. A method for neighbor discovery from user mobile terminal equipment to user mobile terminal equipment without network coverage, comprising:
detecting, at a user equipment, a primary synchronization signal from other user equipment;
making the user equipment act as a head node when no primary synchronization signal is detected; and
transmitting, by the user equipment, a primary synchronization signal, a secondary synchronization signal and configuration information periodically.

2. The method according to claim 1, further comprising:
making, when a primary synchronization signal is detected, the user equipment act as a head node if the received signal to interference and noise ratio of the user equipment is less than or equal to a predetermined threshold, and dynamically adjusting synchronization signal parameters of the head node to avoid mutual interference with the user equipment transmitting the primary synchronization signal.

3. The method according to claim 1, further comprising:
attaching, when a primary synchronization signal is detected, the user equipment to the user equipment transmitting the primary synchronization signal as a non-head node if the received signal to interference and noise ratio of the user equipment is greater than a predetermined threshold.

4. The method according to claim 3, further comprising:
selecting, by the user equipment, a neighbor discovery channel according to preconfigured information or configuration information received from the head node and transmitting a neighbor discovery signal on the selected neighbor discovery channel.

5. The method according to claim 1 or 2, further comprising:
adjusting the timing and a frequency of the user equipment to be consistent with the user equipment transmitting the primary synchronization signal.

6. An apparatus for neighbor discovery from user mobile terminal equipment to user mobile terminal equipment without network coverage, comprising:
means for detecting, at a user equipment, a primary synchronization signal from other user equipment;
means for making the user equipment act as a head node when no primary synchronization signal is detected; and
means for periodically transmitting a synchronization signal, a secondary synchronization signal and configuration information.

7. The apparatus according to claim 6, further comprising:
means for making, when a primary synchronization signal is detected, the user equipment act as a head node if the received signal to interference and noise ratio of the user equipment is less than or equal to a predetermined threshold, and dynamically adjusting synchronization signal parameters of the head node to avoid mutual interference with the user equipment transmitting the primary synchronization signal.

8. The apparatus according to claim 6, further comprising:
means for attaching, when a primary synchronization signal is detected, the user equipment to the user equipment transmitting the primary synchronization signal as a non-head node if the received signal to interference and noise ratio of the user equipment is greater than a predetermined threshold.

9. The apparatus according to claim 8, further comprising:
means for selecting a neighbor discovery channel according to preconfigured information or configuration information received from the head node and transmitting a neighbor discovery signal on the selected neighbor discovery channel.

10. The apparatus according to claim 6 or 7, further comprising:
means for adjusting the timing and a frequency of the user equipment to be consistent with the user equipment transmitting the primary synchronization signal.

11. User equipment comprising an apparatus according to any of claims 6 to 10.
